# EUROPÄISCHE PATENTSCHRIFT

(11) **EP 2 683 941 B1**
(45) Veröffentlichungstag und Bekanntmachung des Hinweises auf die Patenterteilung: **13.05.2015**
(21) Anmeldenummer: 12707752.7
(22) Anmeldetag: 06.03.2012
(51) Int. Cl.: F03D 11/02, F16H 57/08

(54) **PLANETENGETRIEBE EINER WINDKRAFTANLAGE**
PLANETARY TRANSMISSION FOR WIND TURBINE
TRANSMISSION PLANÉTAIRE POUR ÉOLIENNE

(30) Priorität: 08.03.2011 DE 102011005240
(43) Veröffentlichungstag der Anmeldung: 15.01.2014
(73) Patentinhaber: Aktiebolaget SKF, 415 50 Göteborg (SE)
(72) Erfinder: STEINHAUS, Frank, 50670 Köln (DE); BUCH, Stephan, 97422 Schweinfurt (DE)
(74) Vertreter: Schonecke, Mitja
(86) Internationale Anmeldenummer: PCT/EP2012/053806
(87) Internationale Veröffentlichungsnummer: WO 2012/120005

(56) Entgegenhaltungen:
- EP-A1- 1 321 687
- WO-A1-02/079644
- DE-A1-102006 051 817
- US-A1- 2009 190 870

## Beschreibung

Die Erfindung betrifft ein Planetengetriebe einer Windkraftanlage und eine Windkraftanlage. Weiterhin betrifft die Erfindung eine Wälzlageranordnung eines Planetengetriebes einer Windkraftanlage.

Bei einer Windkraftanlage wird aus einer Drehbewegung einer Rotorwelle, die von einem Rotor angetrieben wird mit Hilfe eines Generators elektrische Energie erzeugt. Abhängig vom verfügbaren Drehzahlbereich kommen im Hinblick auf eine effiziente Energieerzeugung unterschiedlicher Bauarten von Generatoren zum Einsatz. Diese Bauarten unterscheiden sich erheblich im Hinblick auf ihre Baugröße und den für ihre Herstellung erforderlichen Materialeinsatz und Fertigungsaufwand. Um den Einsatz möglichst kompakter und kostengünstig herstellbarer Generatoren zu ermöglichen werden Windkraftanlagen deshalb häufig mit Getrieben ausgerüstet, welche die Drehzahl der Rotorwelle in einen Drehzahlbereich übersetzen, für den sich eine gewünschte Bauart von Generatoren eignet. Angesichts der enormen Kräfte und Drehmomente, die insbesondere bei Windkraftanlagen hoher Leistung, d. h. im MW-Bereich, auftreten, haben sich Planetengetriebe als besonders geeignet erwiesen.

Aus der WO 02/079644 A1 ist eine Windenergieanlage mit einem Planetengetriebe bekannt, das Planetenräder aufweist, die mittels einer Lagerung drehbar auf einer Achse gelagert sind.

Die Zahnräder der verwendeten Planetengetriebe werden zum Teil mittels Wälzlagern drehbar gelagert. So werden beispielsweise die Planetenräder eines bei Windkraftanlagen eingesetzten Planetengetriebes mittels einer Lagerung drehbar gelagert, die mehrere axial nebeneinander angeordnete Außenringe aufweist. Die Außenringe sind in einer Bohrung des Planetenrads angeordnet und durch einen Presssitz drehfest mit dem Planetenrad verbunden. Außerdem sind die Außenringe mittels eines Federrings, der zwischen benachbarten Außenringen angeordnet ist und in eine Radialnut im Planetenrad eingreift, gegen axiales Verschieben gesichert. Trotz der drehfesten Verbindung der Außenringe mit dem Planetenrad kann es zu einem Wandern der Außenringe kommen. Dieses Wandern kann mitunter einen erheblichen Verschleiß des zu den Außenringen axial benachbarten Federrings zur Folge haben, obwohl bei den verwendeten Konstruktionen nur vergleichsweise geringe axiale Kräfte zu erwarten sind. Ein Verschleißen des Federrings kann beispielsweise durch abgetrennte Späne zu Folgeschäden an der gesamten Lagerung führen.

Die durch das Wandern der Außenringe hervorgerufenen Probleme können beispielsweise dadurch vermieden werden, dass die Außenringe und der Federring weggelassen werden und die Wälzkörperlaufbahnen und die Anlaufborde einteilig mit dem Planetenrad ausgebildet werden. Im Hinblick auf gute Laufeigenschaften und eine lange Lebensdauer stellt eine derartige Ausgestaltung jedoch Mindestanforderungen an die Materialzusammensetzung des Planetenrads zumindest im Bereich der Wälzkörperlaufbahnen. Außerdem ist in der Regel eine vergleichsweise aufwendige Bearbeitung des Planetenrads erforderlich, um eine geeignete Geometrie der Wälzkörperlaufbahnen und der Anlaufborde sowie eine geeignete Oberflächenbeschaffenheit auszubilden. Etwas geringer können die Anforderungen und der Aufwand gehalten werden, wenn man die Außenringe beibehält und lediglich den Federring durch einen einteilig mit dem Planetenrad ausgebildeten Abstandsring ersetzt.

Der Erfindung liegt die Aufgabe zugrunde, bei einer Lagerung eines Planetenrads eines Planetengetriebes einer Windkraftanlage durch wandernde Außenringe hervorgerufene Schäden möglichst zu verhindern oder zumindest zu begrenzen.

Diese Aufgabe wird durch die Merkmalskombinationen der nebengeordneten Ansprüche gelöst.

Das erfindungsgemäße Planetengetriebe einer Windkraftanlage weist ein Hohlrad mit einer Innenverzahnung und wenigstens ein Planetenrad mit einer Außenverzahnung, die mit der Innenverzahnung des Hohlrads in Eingriff steht, auf. Das Planetenrad ist mittels einer Lagerung drehbar auf einer Achse gelagert. Die Lagerung weist wenigstens einen Außenring mit einem radial nach außen überstehenden Radialvorsprung und wenigstens einen Satz von Wälzkörpern, die auf dem Außenring abrollen, auf. Das Planetenrad weist eine Bohrung und im Bereich eines axialen Endes eine Ausnehmung, welche die Bohrung radial erweitert, auf. Der Außenring ist derart in der Bohrung des Planetenrads angeordnet, dass der Radialvorsprung des Außenrings in die Ausnehmung des Planetenrads eingreift.

Die Erfindung hat den Vorteil, dass sie bei einem Planetengetriebe mit vergleichsweise geringem Aufwand das Risiko von Schäden durch wandernde Außenringe erheblich reduziert.

Die Ausnehmung des Planetenrads kann insbesondere als eine Stufe ausgebildet sein.

Der Außenring kann am Planetenrad befestigt sein. Insbesondere kann der Außenring mittels Presssitz drehfest mit dem Planetenrad verbunden sein. Dadurch lassen sich die durch Wandern des Außenrings hervorgerufenen Schäden reduzieren.

Der Radialvorsprung des Außenrings kann einteilig mit dem Außenring ausgebildet sein. Dies ermöglicht ein besonders günstiges Verhältnis zwischen Baugröße und mechanischer Stabilität.

Der Radialvorsprung des Außenrings kann im Bereich eines axialen Endes des Außenrings angeordnet sein und/oder axial am Planetenrad anschlagen.

Weiterhin kann der Radialvorsprung des Außenrings axial bündig mit dem Planetenrad abschließen oder gegenüber dem axialen Ende des Planetenrads axial zurückversetzt sein. Diese Ausgestaltung hat den Vorteil, dass sie in Axialrichtung im Vergleich zu einem konventionellen Außenring ohne radialen Vorsprung keinen zusätzlichen Bauraum benötigt.

Der Außenring kann eine zylindrische Sitzfläche aufweisen, die im Bereich der Bohrung berührend am Planetenrad anliegt und der Radialvorsprung des Außenrings kann radial nach außen über die Sitzfläche überstehen.

Auf dem Außenring können mehrere Sätze von Wälzkörpern axial nebeneinander abrollen. Weiterhin können mehrere Außenringe axial nebeneinander angeordnet sein.

Die Lagerung kann wenigstens einen Innenring aufweisen, der auf der Achse angeordnet und insbesondere drehfest mit der Achse verbunden ist. Weiterhin kann der Innenring axial an einem Träger anschlagen.

Die Erfindung bezieht sich weiterhin auf eine Windkraftanlage mit einem erfindungsgemäß ausgebildeten Planetengetriebe.

Außerdem bezieht sich die Erfindung auf eine Wälzlageranordnung eines Planetengetriebes einer Windkraftanlage. Die erfindungsgemäße Wälzlageranordnung weist ein Planetenrad mit einer Außenverzahnung und eine Lagerung, die das Planetenrad drehbar auf einer Achse lagert auf. Die Lagerung weist wenigstens einen Außenring mit einem radial nach außen überstehenden Radialvorsprung und wenigstens einen Satz von Wälzkörpern, die auf dem Außenring abrollen, auf. Das Planetenrad weist eine Bohrung und im Bereich eines axialen Endes eine Ausnehmung, welche die Bohrung radial erweitert, auf. Der Außenring ist derart in der Bohrung des Planetenrads angeordnet, dass der Radialvorsprung des Außenrings in die Ausnehmung des Planetenrads eingreift.

Die Erfindung wird nachstehend anhand der in der Zeichnung dargestellten Ausführungsbeispiele erläutert.

Es zeigen:
- Figur 1: ein Ausführungsbeispiel eines erfindungsgemäßen Planetengetriebes einer Windkraftanlage mit einer erfindungsgemäß ausgebildeten Wälzlageranordnung in Schnittdarstellung,
- Figur 2, 3 und 4: verschiedene Ausführungsbeispiele der erfindungsgemäßen Wälzlageranordnung des in Figur 1 dargestellten erfindungsgemäßen Planetengetriebes jeweils in Schnittdarstellung.

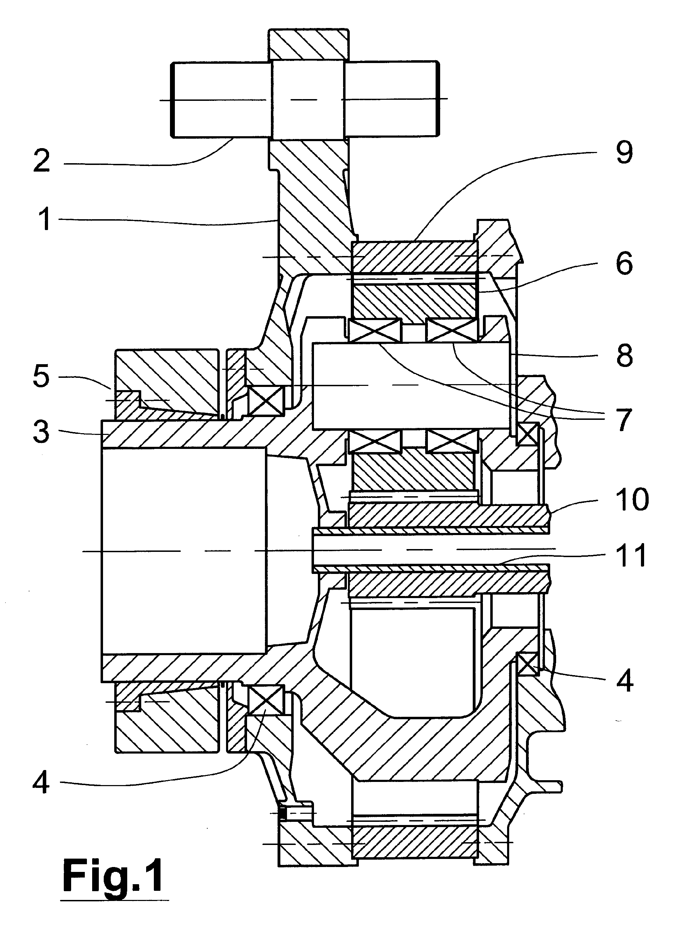

Figur 1 zeigt ein Ausführungsbeispiel eines erfindungsgemäßen Planetengetriebes einer Windkraftanlage mit einer erfindungsgemäß ausgebildeten Wälzlageranordnung in Schnittdarstellung.

Das Planetengetriebe weist ein Gehäuse 1 auf, das mittels Bolzen 2 fest an der Windkraftanlage verankert werden kann. Weiterhin weist das Planetengetriebe einen Träger 3 auf, der mittels einer Lagerung 4 drehbar im Gehäuse 1 gelagert ist und an einem axialen Ende mit einer Kupplung 5 ausgestattet ist. An diesem axialen Ende kann eine nicht figürlich dargestellte Rotorwelle in den Träger 3 eingeführt und mittels der Kupplung 5 drehfest mit dem Träger 3 verbunden werden.

Der Träger 3 trägt mehrere, beispielsweise drei, als Planetenräder 6 ausgebildete Zahnräder mit Außenverzahnung. Die Planetenräder 6 sind jeweils mittels einer Lagerung 7 drehbar auf einer Achse 8 gelagert, die drehfest mit dem Träger 3 verbunden ist. Die Planetenräder 6 sind innerhalb eines Hohlrads 9 mit Innenverzahnung angeordnet, wobei die Außenverzahnung der Planetenräder 6 jeweils mit der Innenverzahnung des Hohlrads 9 in Eingriff steht. Das Hohlrad 9 ist drehfest mit dem Gehäuse 1 verbunden. Weiterhin umgeben die Planetenräder 6 ein als ein Sonnenrad 10 ausgebildetes Zahnrad mit Außenverzahnung derart, dass die Planetenräder 6 mit ihrer Außenverzahnung jeweils in die Außenverzahnung des Sonnenrads 10 eingreifen. Das Sonnenrad 10 kann drehfest mit einer nicht figürlich dargestellten Generatorwelle oder einer nicht figürlich dargestellten weiteren Getriebestufe verbunden sein. Innerhalb des Sonnenrads 10 ist eine Drehdurchführung 11 angeordnet.

Durch das Planetengetriebe wird die Drehbewegung der Rotorwelle in eine wesentlich schnellere Drehbewegung der Generatorwelle umgewandelt, so dass ein effizienter Betrieb des Generators möglich ist.

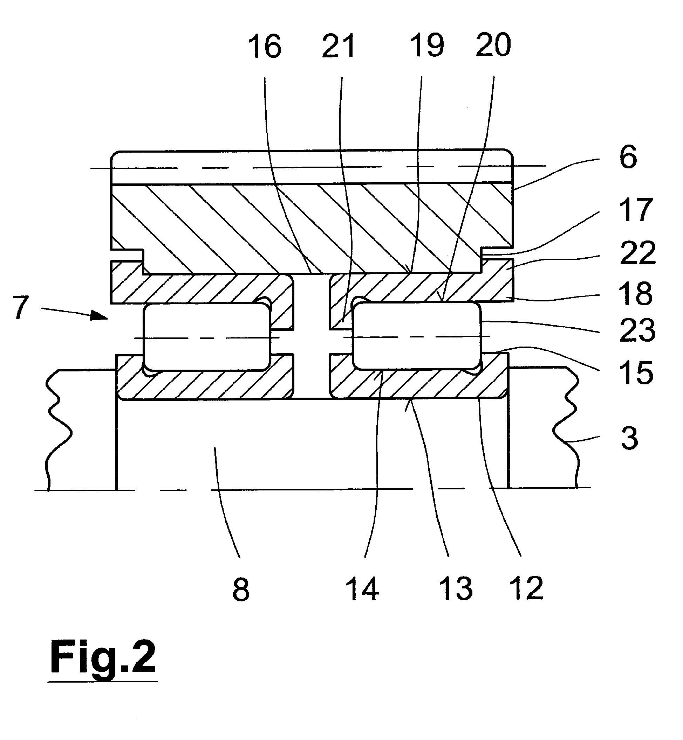

Figur 2 zeigt ein Ausführungsbeispiel der erfindungsgemäßen Wälzlageranordnung des in Figur 1 dargestellten erfindungsgemäßen Planetengetriebes in Schnittdarstellung.

Beim dargestellten Ausführungsbeispiel sind zwei Innenringe 12 in einem Abstand axial nebeneinander auf der Achse 8 angeordnet und schlagen axial jeweils am Träger 3 an. Die Innenringe 12 weisen zylindrische Sitzflächen 13 auf, die unter Vorspannung an der Achse 8 anliegen können, so dass die Innenringe 12 mittels Presssitz drehfest mit der Achse 8 verbunden sind. Jeder Innenring 12 weist eine zylindrische Wälzkörperlaufbahn 14 auf, die axial beidseits durch einen Anlaufbord 15 begrenzt ist.

Das Planetenrad 6 weist eine Bohrung 16 auf, die zu beiden axialen Enden des Planetenrads 6 hin jeweils eine radiale Erweiterung in Form einer Stufe 17 oder einer sonstigen Ausnehmung aufweist. In der Bohrung 16 sind zwei Außenringe 18 in einem Abstand axial nebeneinander angeordnet. Die Außenringe 18 weisen zylindrische Sitzflächen 19 auf, die in der Bohrung 16 unter Vorspannung am Planetenrad 6 anliegen können, so dass die Außenringe 18 mittels Presssitz drehfest mit dem Planetenrad 6 verbunden sind. Jeder Außenring 18 weist eine zylindrische Wälzkörperlaufbahn 20 auf, die axial auf einer Seite, die zur axialen Mitte der Bohrung 16 hin orientiert ist, durch einen Anlaufbord 21 begrenzt ist. Auf der anderen Seite ist kein Anlaufbord 21 vorgesehen. Stattdessen ist auf der anderen Seite ein Radialvorsprung 22 ausgebildet, der radial nach außen über die Sitzfläche 19 des Außenrings 18 übersteht und radial mit dem Planetenrad 6 überlappt. Dabei greift der Radialvorsprung 22 des Außenrings 18 in die Stufe 17 des Planetenrads 6 ein und schlägt im Bereich der Stufe 17 axial am Planetenrad 6 an. Die Stufe 17 des Planetenrads 6 und der Radialvorsprung 22 können so aufeinander abgestimmt sein, dass der Radialvorsprung 22 axial bündig mit dem Planetenrad 6 abschließt. Ebenso ist es auch möglich, dass der Radialvorsprung 22 gegenüber dem axialen Ende des Planetenrads 6 axial zurückversetzt ist.

Weiterhin sind in Figur 2 zwei axial nebeneinander angeordnete Sätze von zylindrischen Wälzkörpern 23 dargestellt, die auf den Wälzkörperlaufbahnen 14 der Innenringe 12 und den Wälzkörperlaufbahnen 20 der Außenringe 18 abrollen. Demgemäß ist das Planetenrad 6 beim dargestellten Ausführungsbeispiel mittels zweier axial nebeneinander angeordneter Zylinderrollenlager gelagert.

Die in Figur 2 dargestellte Wälzlageranordnung wird dadurch zusammengehalten, dass eine Bewegung der Innenringe 12 aus der Bohrung 16 heraus durch das axiale Anschlagen der Innenringe 12 an den Träger 3 verhindert wird. Über die aus der Bohrung 16 heraus orientierten Anlaufborde 15 der Innenringe 12, über die Wälzkörper 23 und über die Anlaufborde 21 der Außenringe 18 wird damit auch eine Bewegung der Außenringe 18 aus der Bohrung 16 heraus verhindert. Eine Bewegung der Außenringe 18 tiefer in die Bohrung 16 hinein wird durch das axiale Anschlagen der Radialvorsprünge 22 der Außenringe 18 an das Planetenrad 6 verhindert. Über die Anlaufborde 21 der Außenringe 18, über die Wälzkörper 23 und über die aus der Bohrung 16 heraus orientierten Anlaufborde 15 der Innenringe 12 wird damit auch eine Bewegung der Innenringe 12 tiefer in die Bohrung 16 hinein verhindert. Die Radialvorsprünge 22 der Außenringe 18 haben somit zur Folge, dass andere Maßnahmen zur axialen Sicherung der Außenringe 18, wie beispielsweise partiell in Radialnuten eingelassene Federringe, entfallen können. Derartige Federringe können bei einer Anwendung in Windkraftanlagen im Lauf der Zeit verschlissen werden, obwohl man bei einem Zylinderrollenlager für diese Anwendung allenfalls geringe axiale Kräfte erwartet. Demgegenüber haben die Radialvorsprünge 22 eine wesentlich höhere Standzeit, da diese relativ massiv und aus einem sehr hochwertigen Material und mit hoher Oberflächenqualität ausgebildet sind. Außerdem würden gegebenenfalls erzeugt Späne nicht mitten in der Wälzlageranordnung sondern lediglich in Randbereichen auftreten, so dass eine geringere Wahrscheinlichkeit einer Schädigung der Lagerung 7 besteht.

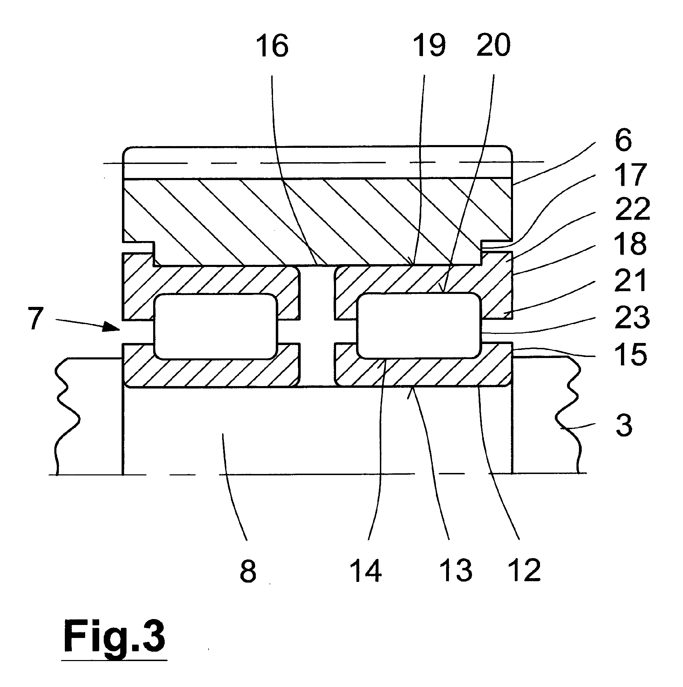

Figur 3 zeigt ein weiteres Ausführungsbeispiel der erfindungsgemäßen Wälzlageranordnung des in Figur 1 dargestellten erfindungsgemäßen Planetengetriebes in Schnittdarstellung.

Das in Figur 3 dargestellte Ausführungsbeispiel unterscheidet sich hinsichtlich der Ausbildung der Innenringe 12 und der Außenringe 18 von Figur 2. Im Gegensatz zu Figur 2 weisen die Innenringe 12 gemäß Figur 3 jeweils lediglich einen Anlaufbord 15 auf. Dieser Anlaufbord 15 ist bezogen auf die Bohrung 16 jeweils nach außen orientiert. Die Außenringe 18 weisen bei Figur 3 im Gegensatz zu Figur 2 nicht nur einen, sondern zwei Anlaufborde 21 auf, die jeweils beidseits der Wälzkörperlaufbahnen 20 der Außenringe 18 angeordnet sind. Im Übrigen entspricht das in Figur 3 dargestellte Ausführungsbeispiel der Figur 2.

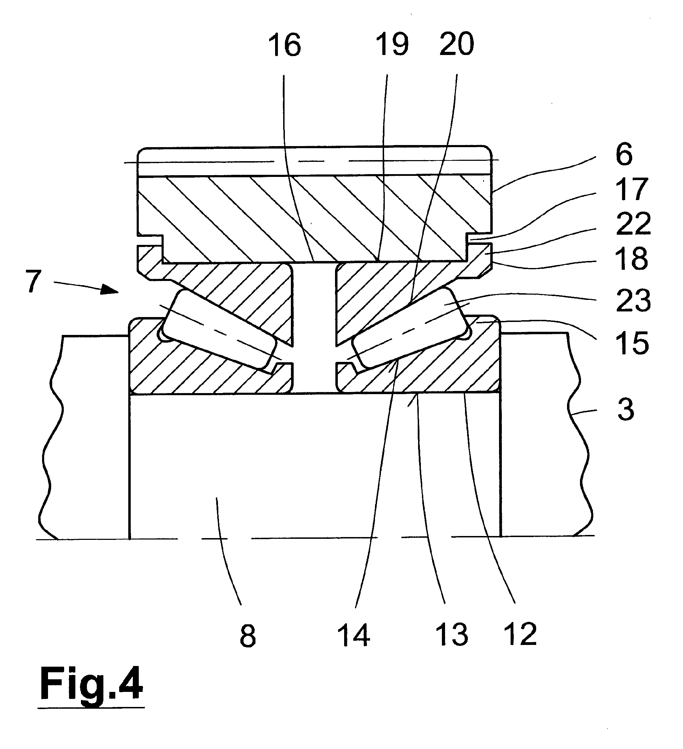

Figur 4 zeigt ein weiteres Ausführungsbeispiel der erfindungsgemäßen Wälzlageranordnung des in Figur 1 dargestellten erfindungsgemäßen Planetengetriebes in Schnittdarstellung.

Das in Figur 4 dargestellte Ausführungsbeispiel unterscheidet sich hinsichtlich der Ausbildung der Innenringe 12 und der Außenringe 18 sowie der Wälzkörper 23 von den Figuren 2 und 3. Im Gegensatz zu den Figuren 2 und 3 weisen die Innenringe 12 und die Außenringe 18 gemäß Figur 4 keine zylindrischen, sondern kegelige Wälzkörperlaufbahnen 14, 20 auf. Außerdem sind die Wälzkörper 23 nicht zylindrisch, sondern kegelig ausgebildet. Die Innenringe 12 sind ansonsten analog zu Figur 2 ausgebildet und weisen demgemäß je einen Anlaufbord 15 beidseits der Wälzkörperlaufbahnen 14 auf. Die Außenringe 18 weisen keine Anlaufborde 21 auf, sind aber hinsichtlich des Radialvorsprungs 22 analog zu den Figuren 2 und 3 ausgebildet.

Bei allen Ausführungsbeispielen können ein oder mehrere Innenringe 12 und/oder ein oder mehrere Außenringe 18 jeweils mehrreihig ausgebildet sein, d. h. Wälzkörperlaufbahnen 14, 20 für mehrere axial nebeneinander angeordnete Sätze von Wälzkörpern 23 aufweisen. Beispielsweise kann die Wälzlageranordnung zwei zweireihige Innenringe 12 und zwei zweireihige Außenringe 18 aufweisen. Ebenso können ein einreihiger und ein zweireihiger Innenring 12 sowie ein einreihiger und ein zweireihiger Außenring 18 oder sonstige Kombinationen vorgesehen werden. Dabei sind auch Kombinationen möglich, bei denen jeweils ein mehrreihiger Innenring 12 mit mehreren einreihigen Außenringen 18 oder umgekehrt kombiniert wird. Auch die Kombination unterschiedlich mehrreihiger Innenringe 12 und Außenringe 18 ist möglich.

Bei allen Ausführungsbeispielen können axial benachbarte Innenringe 12 und/oder axial benachbarte Außenringe 18 jeweils durch einen Abstandsring axial auf Distanz gehalten werden. Dieser Abstandsring ist in der Regel nicht an der Achse 8 bzw. am Planetenrad 6 axial fixiert.

Bei allen Ausführungsbeispielen können die Innenringe 12 und die Außenringe 18 jeweils aus einem hochwertigen Stahl für Wälzlageranwendungen gefertigt sein. Die Anlaufborde 15 können einteilig mit den Innenringen 12 ausgebildet sein. Ebenso können die Anlaufborde 21 einteilig mit den Außenringen 18 ausgebildet sein. Außerdem können die Radialvorsprünge 22 einteilig mit den Außenringen 18 ausgebildet sein. Der Durchmesser der Bohrung 16 des Planetenrads 6 kann außerhalb der Stufen 17 jeweils größer als 300 mm sein und insbesondere Werte zwischen 300 mm und 450 mm aufweisen.

## Patentansprüche

1. Planetengetriebe einer Windkraftanlage mit einem Hohlrad (9), das eine Innenverzahnung aufweist und wenigstens einem Planetenrad (6), das eine Außenverzahnung aufweist, die mit der Innenverzahnung des Hohlrads (9) in Eingriff steht, wobei
- das Planetenrad (6) mittels einer Lagerung (7) drehbar auf einer Achse (8) gelagert ist,
**dadurch gekennzeichnet, dass**
- die Lagerung (7) wenigstens einen Außenring (18) mit einem radial nach außen überstehenden Radialvorsprung (22) und wenigstens einen Satz von Wälzkörpern (23), die auf dem Außenring (18) abrollen, aufweist,
- das Planetenrad (6) eine Bohrung (16) und im Bereich eines axialen Endes eine Ausnehmung (17), welche die Bohrung (16) radial erweitert, aufweist und
- der Außenring (18) derart in der Bohrung (16) des Planetenrads (6) angeordnet ist, dass der Radialvorsprung (22) des Außenrings (18) in die Ausnehmung (17) des Planetenrads (6) eingreift.

2. Planetengetriebe nach Anspruch 1, wobei der Außenring (18) am Planetenrad (6) befestigt ist.

3. Planetengetriebe nach einem der vorhergehenden Ansprüche, wobei der Radialvorsprung (22) des Außenrings (18) einteilig mit dem Außenring (18) ausgebildet ist.

4. Planetengetriebe nach einem der vorhergehenden Ansprüche, wobei der Radialvorsprung (22) des Außenrings (18) im Bereich eines axialen Endes des Außenrings (18) angeordnet ist.

5. Planetengetriebe nach einem der vorhergehenden Ansprüche, wobei der Radialvorsprung (22) des Außenrings (18) axial am Planetenrad (6) anschlägt.

6. Planetengetriebe nach einem der vorhergehenden Ansprüche, wobei der Radialvorsprung (22) des Außenrings (18) axial bündig mit dem Planetenrad (6) abschließt oder gegenüber dem axialen Ende des Planetenrads (6) axial zurückversetzt ist.

7. Planetengetriebe nach einem der vorhergehenden Ansprüche, wobei der Außenring (18) eine zylindrische Sitzfläche (19) aufweist, die im Bereich der Bohrung (16) berührend am Planetenrad (6) anliegt und der Radialvorsprung (22) des Außenrings (18) radial nach außen über die Sitzfläche (19) übersteht.

8. Planetengetriebe nach einem der vorhergehenden Ansprüche, wobei auf dem Außenring (18) mehrere Sätze von Wälzkörpern (23) axial nebeneinander abrollen.

9. Planetengetriebe nach einem der vorhergehenden Ansprüche, wobei mehrere Außenringe (18) axial nebeneinander angeordnet sind.

10. Windkraftanlage mit einem Planetengetriebe nach einem der vorhergehenden Ansprüche.

11. Wälzlageranordnung eines Planetengetriebes einer Windkraftanlage, mit
- einem Planetenrad (6), das eine Außenverzahnung aufweist und
- einer Lagerung (7), die das Planetenrad (6) drehbar auf einer Achse (8) lagert,
**dadurch gekennzeichnet, dass**
- die Lagerung (7) wenigstens einen Außenring (18) mit einem radial nach außen überstehenden Radialvorsprung (22) und wenigstens einen Satz von Wälzkörpern (23), die auf dem Außenring (18) abrollen, aufweist,
- das Planetenrad (6) eine Bohrung (16) und im Bereich eines axialen Endes eine Ausnehmung (17), welche die Bohrung (16) radial erweitert, aufweist und
- der Außenring (18) derart in der Bohrung (16) des Planetenrads (6) angeordnet ist, dass der Radialvorsprung (22) des Außenrings (18) in die Ausnehmung (17) des Planetenrads (6) eingreift.

## Claims

1. Planetary transmission for a wind power plant, with an annulus gear (9) which has an internal toothing and with at least one planet gear (6) which has an external toothing which is in engagement with the internal toothing of the annulus gear (9),
- the planet gear (6) being mounted rotatably on an axis (8) by means of a bearing (7),
**characterized in that**
- the bearing (7) has at least one outer ring (18) with a radially outward-protruding radial projection (22) and at least one set of rolling bodies (23) which roll on the outer ring (18),
- the planet gear (6) has a bore (16) and, in the region of one axial end, a recess (17) which widens the bore (16) radially, and
- the outer ring (18) is arranged in the bore (16) of the planet gear (6) in such a way that the radial projection (22) of the outer ring (18) engages into the recess (17) of the planet gear (6).

2. Planetary transmission according to Claim 1, the outer ring (18) being fastened to the planet gear (6).

3. Planetary transmission according to one of the preceding claims, the radial projection (22) of the outer ring (18) being formed in one part with the outer ring (18).

4. Planetary transmission according to one of the preceding claims, the radial projection (22) of the outer ring (18) being arranged in the region of one axial end of the outer ring (18).

5. Planetary transmission according to one of the preceding claims, the radial projection (22) of the outer ring (18) abutting the planet gear (6) axially.

6. Planetary transmission according to one of the preceding claims, the radial projection (22) of the outer ring (18) terminating, flush with the planet gear (6), axially or being set back axially with respect to the axial end of the planet gear (6).

7. Planetary transmission according to one of the preceding claims, the outer ring (18) having a cylindrical seat surface (19) which, in the region of the bore (16), bears with contact against the planet gear (6), and the radial projection (22) of the outer ring (18) protrudes above the seat surface (19) radially outwardly.

8. Planetary transmission according to one of the preceding claims, a plurality of sets of rolling bodies (23) rolling axially next to one another on the outer ring (18).

9. Planetary transmission according to one of the preceding claims, a plurality of outer rings (18) being arranged axially next to one another.

10. Wind power plant having a planetary transmission according to one of the preceding claims.

11. Rolling bearing arrangement of a planetary transmission of a wind power plant, with
- a planet gear (6) which has an external toothing and
- a bearing (7) which supports the planet gear (6) rotatably on an axis (8),
**characterized in that**
- the bearing (7) has at least one outer ring (18) with a radially outward-protruding radial projection (22) and at least one set of rolling bodies (23) which roll on the outer ring (18),
- the planet gear (6) has a bore (16) and, in the region of one axial end, a recess (17) which widens the bore (16) radially, and
- the outer ring (18) is arranged in the bore (16) of the planet gear (6) in such a way that the radial projection (22) of the outer ring (18) engages into the recess (17) of the planet gear (6).

## Revendications

1. Transmission planétaire pour éolienne, comprenant une couronne dentée (9), qui présente une denture intérieure et au moins un pignon satellite (6) qui présente une denture extérieure qui est en prise avec la denture intérieure de la couronne dentée (9),
- le pignon satellite (6) étant supporté à rotation sur un axe (8) au moyen d'un support sur palier (7),
**caractérisée en ce que**
- le support sur palier (7) présente au moins une bague extérieure (18) avec une saillie radiale (22) faisant saillie radialement vers l'extérieur, et au moins un jeu de corps de roulement (23) qui roulent sur la bague extérieure (18),
- le pignon satellite (6) présente un alésage (16) et, dans la région d'une extrémité axiale, un évidement (17) qui élargit radialement l'alésage (16), et
- la bague extérieure (18) est disposée dans l'alésage (16) du pignon satellite (6) de telle sorte que la saillie radiale (22) de la bague extérieure (18) vienne en prise dans l'évidement (17) du pignon satellite (6).

2. Transmission planétaire selon la revendication 1, dans laquelle la bague extérieure (18) est fixée sur le pignon satellite (6).

3. Transmission planétaire selon l'une quelconque des revendications précédentes, dans laquelle la saillie radiale (22) de la bague extérieure (18) est réalisée d'une seule pièce avec la bague extérieure (18).

4. Transmission planétaire selon l'une quelconque des revendications précédentes, dans laquelle la saillie radiale (22) de la bague extérieure (18) est disposée dans la région d'une extrémité axiale de la bague extérieure (18).

5. Transmission planétaire selon l'une quelconque des revendications précédentes, dans laquelle la saillie radiale (22) de la bague extérieure (18) bute axialement contre le pignon satellite (6).

6. Transmission planétaire selon l'une quelconque des revendications précédentes, dans laquelle la saillie radiale (22) de la bague extérieure (18) se termine axialement en affleurement avec le pignon satellite (6) ou est en retrait axialement par rapport à l'extrémité axiale du pignon satellite (6).

7. Transmission planétaire selon l'une quelconque des revendications précédentes, dans laquelle la bague extérieure (18) présente une surface de siège cylindrique (19) qui s'applique dans la région de l'alésage (16) en contact avec le pignon satellite (6) et la saillie radiale (22) de la bague extérieure (18) fait saillie radialement vers l'extérieur au-delà de la surface de siège (19).

8. Transmission planétaire selon l'une quelconque des revendications précédentes, dans laquelle plusieurs jeux de corps de roulement (23) roulent axialement les uns à côté des autres sur la bague extérieure (18).

9. Transmission planétaire selon l'une quelconque des revendications précédentes, dans laquelle plusieurs bagues extérieures (18) sont disposées axialement les unes à côté des autres.

10. Éolienne comprenant une transmission planétaire selon l'une quelconque des revendications précédentes.

11. Agencement de palier à roulement d'une transmission planétaire d'une éolienne, comprenant
- un pignon satellite (6) qui présente une denture extérieure et
- un support sur palier (7) qui supporte le pignon satellite (6) de manière à pouvoir tourner sur un axe (8),
**caractérisé en ce que**
- le support sur palier (7) présente au moins une bague extérieure (18) avec une saillie radiale (22) faisant saillie radialement vers l'extérieur et au moins un jeu de corps de roulement (23) qui roulent sur la bague extérieure (18),
- le pignon satellite (6) présente un alésage (16) et, dans la région d'une extrémité axiale, un évidement (17) qui élargit radialement l'alésage (16), et
- la bague extérieure (18) est disposée dans l'alésage (16) du pignon satellite (6) de telle sorte que la saillie radiale (22) de la bague extérieure (18) vienne en prise dans l'évidement (17) du pignon satellite (6).
